# EUROPÄISCHE PATENTANMELDUNG

(11) **EP 1 625 818 A2**
(43) Veröffentlichungstag der Anmeldung: **15.02.2006**
(21) Anmeldenummer: 05017609.8
(22) Anmeldetag: 12.08.2005
(51) Int. Cl.: A47J 37/07

(54) **Vorrichtung zur Erhöhung der Luftzufuhr**

(30) Priorität: 13.08.2004 DE 202004012816 U
(71) Anmelder: Wagner, Eduard, 41812 Erkelenz (DE)
(72) Erfinder: Wagner, Eduard, 41812 Erkelenz (DE)
(74) Vertreter: Castell, Klaus

(57) **Zusammenfassung**

Eine Vorrichtung mit mindestens einem Fächerelement zur Erhöhung der Luftzufuhr insbesondere für offene Feuer und Grillfeuer hat einen Stiel mit einem Stielschaft. Das Fächerelement ist um eine Längsachse (L) des Stielschaftes vorzugsweise unwuchtig drehbar gelagert.

## Beschreibung

Die Erfindung betrifft eine Vorrichtung mit mindestens einem Fächerelement zur Erhöhung der Luftzufuhr für offene Feuer, insbesondere Grillfeuer.

Beim Grillen wird eine Luftzufuhr zum schnelleren und gleichmäßigeren Durchglühen der Grillkohlen, des Holzes, etc. benötigt. Zumeist wird sich mit direktem Einblasen von Atemluft beholfen, wobei es dann besonders effektiv erscheint, nahe an das Grillfeuer heranzutreten.

Durch Funkenflug, der oft bei einer derartigen Luftzufuhr erzeugt wird, ergibt sich allerdings eine Verbrennungsgefahr von Haut, Haaren, Händen, Augen oder der Kleidung.

Oft wird unter Verwendung eines Hilfsmittels, wie etwa eines Blasebalgs, einer Luftpumpe oder eines Fächerelementes in Form eines Tellers oder eines Stücks Pappe versucht, die Luftzufuhr zu erzeugen.

Die Verbrennungsgefahr für eine Person am Grill besteht allgemein durch den Gebrauch derartiger Hilfsmittel, da diese unmittelbar am offenen Feuer eingesetzt werden. Des Weiteren hat es sich gezeigt, dass die verwendeten Hilfsmittel selbst brennen oder zumindest schmelzen können, da sie meist nicht für den oben genannten Zweck ausgebildet sind. Die Hilfsmittel sind außerdem durch eine derartige Zweckentfremdung mit hoher Wahrscheinlichkeit der Gefahr einer Beschädigung oder einer Verscbmutzung durch Ruß oder Rauch ausgesetzt. Zudem ist die Luftzufuhr selbst nicht optimal, da der Luftstrom unregelmäßig und/oder zu kleinräumig stattfindet, z. B. beim Einsatz der Luftpumpe.

Aufgabe der Erfindung ist es, eine Vorrichtung zur Erhöhung der Luftzufuhr für offene Feuer, insbesondere Grillfeuer, vorzuschlagen, welche die Verbrennungsgefahr für Mensch und Material reduziert und gleichzeitig eine effektive Luftzufuhr zum offenen Feuer gestattet.

Die Aufgabe wird dahingehend gelöst, dass die Vorrichtung einen Stiel mit einem Stielschaft aufweist und das Fächerelement um eine Längsachse des Stielschaftes vorzugsweise unwuchtig drehbar gelagert ist.

Die beanspruchte drehbare Lagerung des erfindungsgemäßen Fächerelementes an dem Stielschaft der Vorrichtung erlaubt ein Rotieren des Fächerelementes, wodurch auf einfache Weise ein gleichmäßiger Luftzug erzeugt wird, der sich rotationsabhängig regulieren lässt, ohne dass dabei eine Hand, welche den Stiel hält, dem offenen Feuer besonders nahe ist.

Durch die geschlossene, ebene oder gebogene Fläche des Fächerelementes werden bei der Rotation Verwirbelungen der Luft erzeugt, die sich effektiv zur Erhöhung der Luftzufuhr einsetzen lassen. Vorzugsweise soll das Fächerelement um eine Längsachse des Stielschaftes unwuchtig drehbar gelagert sein, da dadurch dem Stiel einhändig eine Präzessionsbewegung vermittelt werden kann, die das Fächerelement zu einer Rotationsbewegung veranlasst.

Der Abstand zwischen einer Bedienperson und dem Feuer kann noch weiter dadurch erhöht werden, dass der Stiel besonders lang ausgestaltet ist, sich mit einer am Stielschaft befestigbaren Verlängerung verlängern lässt oder selbst verlängerbar ist, wie etwa durch einen Teleskopschaft. Ein Teleskopschaft hat zudem den Vorteil, dass sich die Vorrichtung insgesamt auf ein handliches Packmaß zusammenschieben lässt, wodurch sie leichter zu transportieren ist.

Eine vorteilhafte Weiterbildung der Erfindung besteht darin, dass das Fächerelement mittels mindestens eines Scharnierelements am Stielschaft drehbar gelagert ist, wobei das Scharnierelement ein Metall- oder Kunststoffscharnier sein kann. Selbstverständlich kann das Scharnierelement dabei einstückig mit dem Fächerelement verbunden sein oder aber mittels Schrauben, Nieten oder ähnlichem an diesem befestigt sein. Das Scharnier kann seitlich eine Einrastöffnung aufweisen oder geschlossen sein, etwa in Form eines geschlossenen Hohlzylinders.

Statt eines Scharnierelementes kann auch eine Schlaufe aus Leder oder Textilstoff, insbesondere nichtbrennbarem Textilstoff, verwendet werden. Selbstverständlich kann das Scharnierelement auch aufwändiger ausgebildet sein und etwa zusätzlich ein Kugel- oder Nadellager aufweisen, das die Reibung zwischen Scharnierelement und Stielschaft reduziert.

Eine vorteilhafte Weiterbildung besteht darin, dass das Stilelement ein Griffelement aufweist, um eine bessere Handhabbarkeit der Vorrichtung zu ermöglichen.

Eine andere vorteilhafte Weiterbildung sieht vor, dass das Griffelement eine Wärmeleitfähigkeit kleiner einem vorgegebenen Schwellenwert aufweist, um damit auch ein längeres Arbeiten in der Nähe des offenen Feuers zu ermöglichen, ohne dass das Griffelement besonders erwärmt werden würde.

Weiterhin ist es vorteilhaft, dass die unwuchtige Lagerung des Fächerelementes durch eine bezüglich der Längsachse des Stielschaftes unsymmetrische räumliche Ausgestaltung des Fächerelementes realisiert ist, da sich hierdurch die Unwucht, die zur Einleitung der Drehung des Fächerelements benötigt wird, auf besonders einfache Weise erzeugen lässt.

Eine vorteilhafte Weiterbildung der Erfindung gibt an, dass die unwuchtige Lagerung des Fächerelementes alternativ oder zusätzlich durch eine bezüglich der Längsachse des Stielschaftes unsymmetrische Verteilung der Masse des Fächerelementes realisiert ist, so dass die Luftzufuhr besonders gleichmäßig vonstatten gehen kann. Die räumliche Ausdehnung des Fächerelementes gegenüber der Längsachse des Stielschaftes kann dabei symmetrisch sein.

Das Fächerelement sollte aus einem schwer entflammbaren Material hergestellt sein, damit es auch bei unbeabsichtigter Berührung mit einer Flamme des Feuers sich nicht entzündet.

Eine weitere vorteilhafte Weiterbildung sieht schließlich vor, dass das Fächerelement aus nicht brennbarem Material besteht, da sich die Vorrichtung in diesem Fall auch zum Ausschlagen von kleinen, unerwünschten Feuern gebrauchen lässt.

Im Folgenden wird die erfindungsgemäße Vorrichtung unter Bezugnahme auf beigefügte Figuren in Form von Ausführungsbeispielen näher erläutert.

Es zeigt
Fig. 1 eine schematische Seitenansicht einer erfindungsgemäßen Vorrichtung,
Fig. 2 eine perspektivische Seitenansicht eines Stieles mit Griffelement,
Fig. 3 eine perspektivische Seitenansicht eines ebenen Fächerelements mit einem separierbaren Scharnierelement,
Fig. 4 eine perspektivische Seitenansicht eines Seharnierelements gemäß Fig. 3,
Fig. 5 eine perspektivische Seitenansicht eines ebenen Fächerelements mit zwei seitlich geöffneten Scharnierelementen,
Fig. 6 eine perspektivische Seitenansicht eines ebenen Fächerelements mit einem seitlich geschlossenen Scharnierelement,
Fig. 7 eine perspektivische Seitenansicht eines ebenen Fächerelements mit zwei seitlich geschlossenen Scharnierelementen,
Fig. 8 eine perspektivische Seitenansicht eines gebogenen Fächerelements mit einem seitlich geschlossenen Scharnierelement,
Fig. 9 eine Ansicht der Teile eines alternativen Fächerelementes und
Fig. 10 ein aus den in Figur 9 gezeigten Teilen zusammengesetztes Fächerelement.

In allen Figuren sind gleiche Elemente mit gleichen Bezugszeichen bezeichnet.

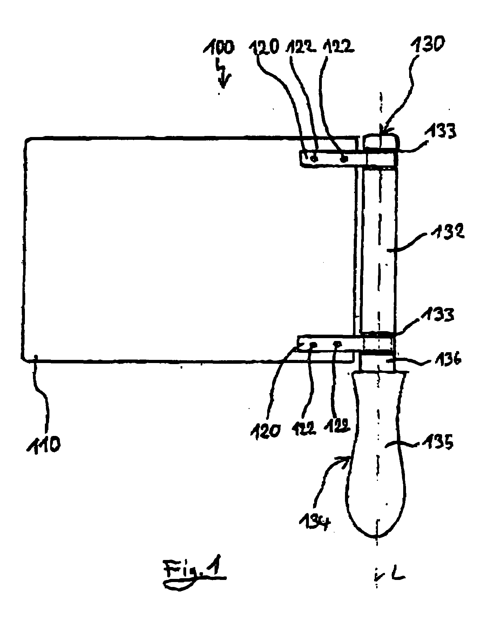

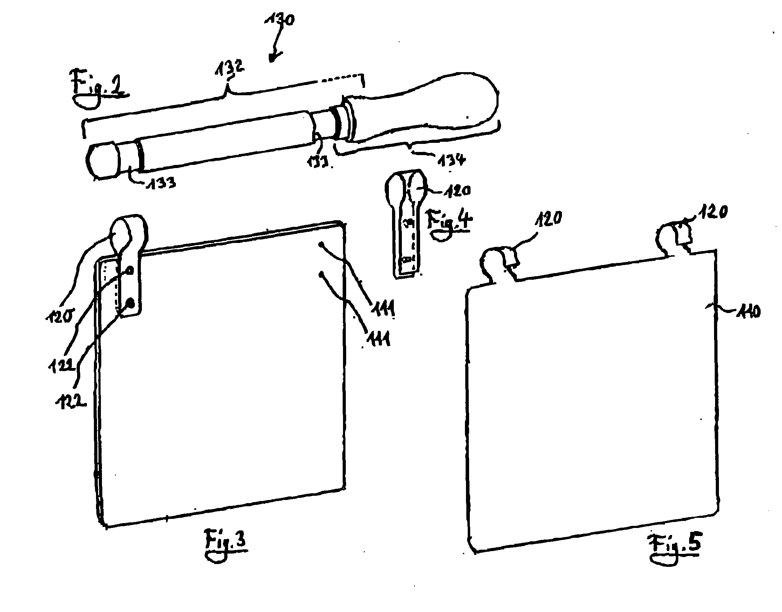

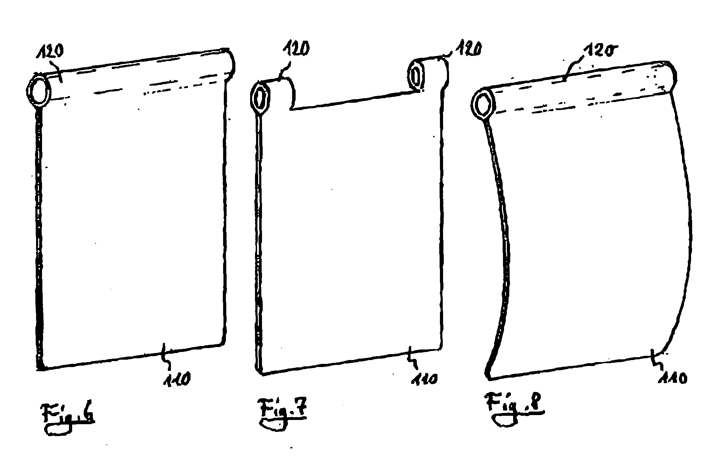

Die in Fig. 1 gezeigte Vorrichtung 100 weist ein Fächerelement 110 aus etwa 0,5 mm dickem Stahlblech auf, an welchem zwei Scharnierelemente 120 aus Weißblech mittels Nieten 122 befestigt sind. Das Stahlblech des Fächerelement 110 besitzt eine Grundfläche von etwa 25 X 20 cm und ist an allen vier Ecken abgerundet, um eine eventuell bestehende Verletzungsgefahr einer Bedienperson zu minimieren. Zudem weist das Stahlblech ein oder im Ausführungsbeispiel zwei Paar Bohrungen 111 auf, die in Fig. 3 gezeigt sind, und durch welche die Nieten 122 zwecks Befestigung der Scharnierelemente 120 hindurch gesteckt werden können.

Die beiden Scharnierelemente 120 sind drehbar in zwei ringförmigen Nuten 133 eines Stielschaftes 132 eines Stiels 130 gelagert. Dadurch wird gewährleistet, dass es durch die in Richtung einer Längsachse L des Stielschaftes 132 auftretenden Kräfte, die bei einer Bedienung der Vorrichtung 100 auftreten können, nicht zu einem Ablösen der Scharnierelemente 120 und damit des Fächerelementes 110 vom Stiel 130 kommen kann.

Der Stiel 130 weist zudem ein Griffelement 134 in Form eines Holzgriffes 135 mit Metallbund 136 auf. Das Holz des Holzgriffs 135 ist ein sogenannter schlechter Wärmeleiter, wodurch ein sich über mehrere Minuten erstreckendes Umfassen des vergleichsweise kühlen Holzgriffes 135 und damit ein angenehmes Arbeiten in der Nähe des Grillfeuers mit der erfindungsgemäßen Vorrichtung 100 ermöglicht wird. Ebenfalls zur besseren und angenehmeren Handhabung der Vorrichtung 100 dient die ergonomisch günstig gestaltete Griffform des Holzgriffes 135, die sich zu dessen Mitte hin deutlich verjüngt.

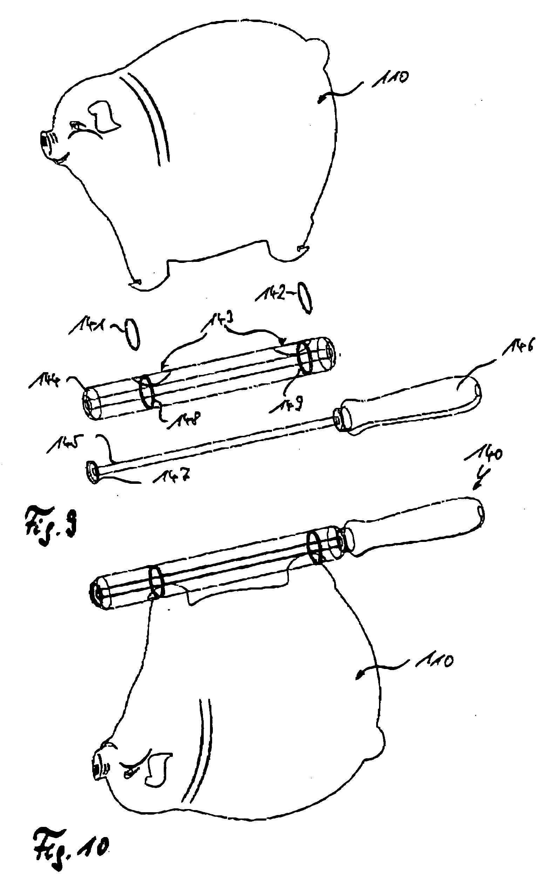

Die Figuren 2 bis 4 zeigen nochmals verdeutlicht die wesentlichen Einzelteile der zerlegten Vorrichtung 1.

Die Figur 5 zeigt eine Alternative zu den in den Figuren 1, 3 und 4 gezeigten Scharnierelementen 120, bei der auf besonders einfache Weise die Scharnierelemente 120, die im übrigen einstückig mit dem Fächerelement 110 verbunden sind , in die Nuten 133 des Stielschaftes 132 in Figur 2 eingerastet werden können, wobei entsprechend materialeigene Feder- und Rückstellkräfte der Scharnierelemente 120 auch ein mehrfaches Einrasten und wieder Lösen erlauben.

Die Figuren 6 bis 8 zeigen weitere Alternativen einer geschlossenen Scharnierform und der Form des Fächerelements 110, wobei das in Fig. 8 gezeigte Fächerelement 110 aufgrund der gebogenen Fläche ein anderes Strömungsverhalten als die Fächerelemente 110 der Figuren 1, 3, 5, 6 und 7 besitzt.

Letztlich zeigen die Figuren 9 und 10 eine weitere Ausführungsform 140, bei der das Fächerelement 110 eine Tierform aufweist und mittels Sprengringen 141, 142 in einem Schlitz 143 eines Hohlstabes 144 gehalten wird. Um die Drehbewegung zu ermöglichen, ist der Hohlstab 144 mit dem Fächerelement 110 auf einem Stab 145 mit Griff 146 aufgesteckt, wo er mit einem Metallclip 147 gehalten wird. Dies ermöglicht es, das Fächerelement 110 in den halbkreisförmigen Schlitz 143 zu stecken und beidseitig mit je einem in einer Nut 148 bzw. 149 gehaltenen Sprengring zu befestigen.

## Patentansprüche

1. Vorrichtung (100) mit mindestens einem Fächerelement (110) zur Erhöhung der Luftzufuhr insbesondere für offene Feuer und Grillfeuer, ***dadurch gekennzeichnet, dass*** die Vorrichtung (100) einen Stiel (130) mit einem Stielschaft (132) aufweist, und das Fächerelement(110) um eine Längsachse (L) des Stielschaftes (132) vorzugsweise unwuchtig drehbar gelagert ist.

2. Vorrichtung (100) nach Anspruch 1, ***dadurch gekennzeichnet, dass*** der Stiel (130) verlängerbar ist.

3. Vorrichtung (100) nach Anspruch 1 oder 2, ***dadurch gekennzeichnet, dass*** das Fächerelement (110) mittels mindestens eines Scharnierelementes (120) oder einer Schlaufe an dem Stielschaft (132) drehbar gelagert ist.

4. Vorrichtung (100) nach mindestens einem der Ansprüche 1 bis 3, ***dadurch gekennzeichnet, dass*** die unwuchtige Lagerung des Fächerelementes (110) durch eine bezüglich der Längsachse (L) des Stielschaftes (132) unsymmetrische räumliche Ausgestaltung des Fächerelementes (110) realisiert ist.

5. Vorrichtung (100) nach mindestens einem der Ansprüche 1 bis 4, ***dadurch gekennzeichnet, dass*** die unwuchtige Lagerung des Fächerelementes (110) durch eine bezüglich der Längsachse (L) des Stielschaftes (132) unsymmetrische Verteilung der Masse des Fächerelementes (110) realisiert ist.

6. Vorrichtung (100) nach mindestens einem der Ansprüche 1 bis 5, ***dadurch gekennzeichnet, dass*** der Stiel (130) ein Griffelement (134) aufweist.

7. Vorrichtung (100) nach mindestens einem der Ansprüche 1 bis 6, ***dadurch gekennzeichnet, dass*** das Griffelement (134) eine Wärmeleitfähigkeit kleiner einem vorgegebenen Schwellenwert aufweist.

8. Vorrichtung (100) nach mindestens einem der vorangegangenen Ansprüche, ***dadurch gekennzeichnet, dass*** das Fächerelement (110) aus schwer entflammbarem Material besteht.

9. Vorrichtung (100) nach mindestens einem der vorangegangenen Ansprüche, ***dadurch gekennzeichnet, dass*** das Fächerelement (110) aus nicht brennbarem Material besteht.
